(19)

Europäisches
Patentamt
European
Patent Office
Office européen
des brevets

(11) **EP 3 208 729 A1**

(12) **EUROPEAN PATENT APPLICATION**

(43) Date of publication:
**23.08.2017 Bulletin 2017/34**

(51) Int Cl.:
**G06F 21/10** *(2013.01)*     **G06F 21/64** *(2013.01)*

(21) Application number: **16305175.8**

(22) Date of filing: **16.02.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **ALCATEL LUCENT
92100 Boulogne-Billancourt (FR)**

(72) Inventors:
• **TYTGAT, Donny
2018 Antwerp (BE)**

• **MACQ, Jean-François
2018 Antwerpen (BE)**

(74) Representative: **ALU Antw Patent Attorneys
Intellectual Property and Standards
Copernicuslaan 50
2018 Antwerp (BE)**

Remarks:
Amended claims in accordance with Rule 137(2)
EPC.

(54) **METHOD AND DEVICE FOR CERTIFICATION OF CONTENT**

(57)     Embodiments relate to a method for certification of content, executed by a content processing device (3, 4, 5), comprising:
- receiving (T1) a content item (x), a signature token (Token(x)) and a certification package (CP), wherein the certification package (CP) specifies:
- transformation data (TD) specifying transformation rules associated with the content, wherein the transformation rules specify at least one of a free transformation, a limited transformation and a prohibited transformation, and
- a signature function (T()) which is invariant to free transformations, and not invariant to limited or prohibited transformations, and
- checking (T2) a match between a signature value (H(T(x), T(x)) determined in function of the output of the signature function applied to the received content, and the signature token decrypted with a public key associated with the content.

FIG. 3

**Description**

FIELD OF THE INVENTION

The present invention relates to the field of telecommunications. In particular, the present invention relates to methods and devices for certification of content.

BACKGROUND

New content distribution technologies enable video content to be generated and transformed in the transmission path in such a way that the original rights owners cannot directly control how the content looks like when it is consumed. As such, the content owner (and/or the people who are represented in the content) has the risk of being inappropriately depicted in the resulting video streams. In other words, the visual information that is shown to the end-user is not guaranteed to be coming from an authentic source anymore.

One such technology involves the use of object-based content representations in a video codec. In it, a video stream can consist out of a sequence of object identifiers, related object actions and even higher level semantic information. Throughout the video distribution process, the video stream can be transformed to best fit the conditions and requirements at each point in time. When the content needs to be shown to an end-user, the objects within are assembled and rendered according to the target viewing device.

While these new technologies enable fascinating and flexible use cases, there is the risk of having transformations applied to the data that do not comply with the authors / actors views (the term 'actor' is used to indicate someone who is part of a video clip). If one can model a talking face for instance, and instantiate this face by means of parameters, one modify what an actor says by simply changing these model parameters. Completely new sequences could even be generated without the actors consent. As such, one could have a certain actor say or do things that he/she does not support. Furthermore, one cannot give any guarantee that the content that one is viewing is actually what happened in real life.

This is obviously a big problem that requires an adequate solution which supports the flexible nature of future video representations whilst protecting the rights of the content creator / actors.

Current solutions set out to protecting content by means of assuring that the input video is the same as the output video that is shown to the consumer. These so-called DRM techniques work because of this assumption that input equals output. One option is to create a 'signature' of the video stream (e.g. with a hash algorithm) and encrypt it with a so-called 'private key' of the content owner. This private key is not distributed, however the matching 'public key' is. If someone wants to verify if the content is valid, this signature can be used by decrypting it using the public key and verifying that the hash is the same as the hash of the content itself.

If not only verification is needed, but also protection against unwarranted playback, one can encrypt the complete content with a related system. If the content owner gives the right to the end-user that he/she can playback the video, a valid decryption key is generated and it is encrypted with the public key of the end-user so he/she can use this decryption key (by decrypting it with his/her private key).

However, as was mentioned, this only works for content that does not transform during its progress through the system. With future video codecs, such schemes will lose their value and other schemes will need to take their place.

SUMMARY

It is thus an object of embodiments of the present invention to propose methods and devices for certification of content, which do not show the inherent shortcomings of the prior art.

Accordingly, embodiments relate to a method for certification of content, executed by a content processing device, comprising:

- receiving a content item, a signature token and a certification package, wherein the certification package specifies:
- transformation data specifying transformation rules associated with the content, wherein the transformation rules specify at least one of a free transformation, a limited transformation and a prohibited transformation, and
- a signature function which is invariant to free transformations, and not invariant to limited or prohibited transformations, and
- checking a match between a signature value determined in function of the output of the signature function applied to the received content, and the signature token decrypted with a public key associated with the content.

Correspondingly, embodiments relate to a content processing device for certification of content, comprising means configured for:

- receiving a content item, a signature token and a certification package, wherein the certification package specifies:
- transformation data specifying transformation rules associated with the content, wherein the transformation rules specify at least one of a free transformation, a limited transformation and a prohibited transformation, and
- a signature function which is invariant to free transformations, and not invariant to limited or prohibited transformations, and
- checking a match between a signature value determined in function of the output of the signature function applied to the received content, and the signature token decrypted with a public key associated with the content.

In some embodiments, the certification package further specifies signature token generation data specifying a mapping between allowed values of the signature function and corresponding signature tokens, the method comprising:

- determining an output content item in function of the received content and the transformation rules, and an output signature token in function of the output content item and the signature token generation data.

Some embodiments comprise sending said output content item, said output signature token and said certification package to another device.

The transformation data may specify a list of allowed values of the signature function. For example, the transformation data may specify a mapping between values of the signature function for the content item and values of the signature function for the output content item.

The signature value may be determined by applying a hash function to the output of the signature function applied to the received content.

Embodiments relate to a method for certification of content, executed by a content certification device, comprising:

- receiving a first content item, first hint data and second hint data associated with the first content item, and a second content item, wherein transformation rules are associated with the first content item,
- determining first comparison items in function of the first content item and the first hint data, and second comparison items in function of the second content item and the second hint data,
- determining whether the second content item is an allowed transformation of the first content item, by comparing the first comparison items and the second comparison items.

Correspondingly, embodiments relate to a content certification device, comprising means for:

- receiving a first content item, first hint data and second hint data associated with the first content item, and a second content item, wherein transformation rules are associated with the first content item,
- determining first comparison items in function of the first content item and the first hint data, and second comparison items in function of the second content item and the second hint data,
- determining whether the second content item is an allowed transformation of the first content item, by comparing the first comparison items and the second comparison items.

Some embodiments comprise receiving a first relation and a second relation associated with the first content item, wherein determining the first comparison items uses the first relation and determining the second comparison items uses the second relation.

Determining whether the second content item is an allowed transformation of the first content item may comprise comparing the first comparison items and the second comparison items by using a compatible function specified for identifying a non-exact match.

Some embodiments comprise issuing a signed certificate in response to determining that the second content item is an allowed transformation of the first content item.

Determining first comparison items may comprise determining feature tracks including detected features specified by said first hint data, and/or determining second comparison items comprises determining feature tracks including detected features specified by said second hint data.

Determining second comparison items may comprise fitting at least one object model on said second content item, wherein said second hint data specifies allowed values for at least one model fitting parameter.

Embodiments also relate to a computer program comprising instructions for performing the method mentioned before when said instructions are executed by a computer.

BRIEF DESCRIPTION OF THE DRAWINGS

The above and other objects and features of the invention will become more apparent and the invention itself will be best understood by referring to the following description of embodiments taken in conjunction with the accompanying drawings wherein:

Figure 1 is a bloc diagram of a telecommunication network according to a first embodiment,
Figures 2 and 3 are flowcharts of methods executed in the telecommunication network of Figure 1,
Figure 4 is a bloc diagram of a telecommunication network according to a second embodiment,
Figure 5 is a flowchart of a method executed in the telecommunication network of Figure 4,
Figure 6 is a graph representing feature tracks, and
Figure 7 is a structural view of a content processing device of the telecommunication network of Figure 1 or 4.

DESCRIPTION OF EMBODIMENTS

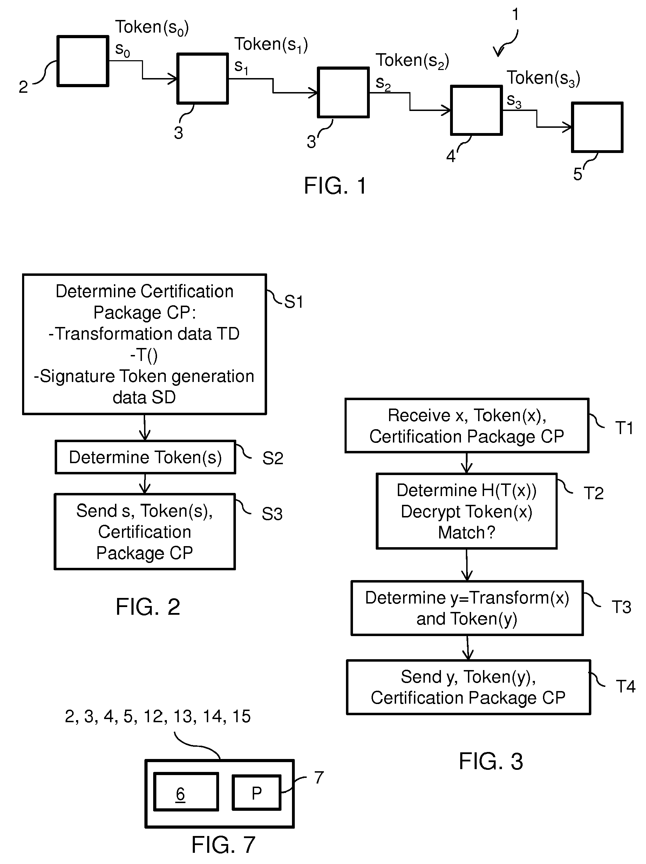

**Figure 1** is a partial view of telecommunication network 1. The telecommunication network 1 comprises a content server 2, one or more content transmission devices, and one or more user terminals 5. The content transmission devices may include one or more trust-less nodes 3 and/or one or more trusted-nodes 4. In the example shown on Figure 1, there are two trust-less nodes 3 and one trusted-node 4.

The content server 2 generates and/or store media content. The media content may be for example a pixel-based encoded video, a semantically described video, a static image, audio content, text...or a combination thereof.

A media content item is transmitted from the content server 2 to a user terminal 5, through the content transmission devices. The content transmission devices may transform the media content. For example, in Figure 1, the content server 2 sends a content item $s_0$ to a first trust-less node 3, the first trust-less node 3 transforms the content item $s_0$ into a content item $s_1$ and sends it to a second trust-less node 3, the second trust-less node 3 transforms the content item $s_1$ into a content item $s_2$ and sends it to a trusted node 4, and the trusted node 4 transforms the content item $s_2$ into a content item $s_3$ and sends it to the user terminal 5.

The successive transformations of the content item aim for example at adapting the content throughout the network. The content item $s_0$ is generated and injected in the network. A number of transformations are applied to this video stream. These transformations adapt the content to the network/user/device conditions.

In an example, the content item $s_0$ is a semantic video stream, which defines the type of objects that are in the stream, the type of actions that are being done and so on. The successive content transmission devices transform the semantic level in order to (typically) move from high-level semantics to lower level representations (up to the point of pixels). For example, a first content transmission device transforms this semantic video stream $s_0$ into a more explicit stream where the objects types are replaced by actual object. They are instantiated according to the current conditions (network/device/user/etc.). The actions are still abstract however in this resulting content item $s_1$. These are instantiated by the second content transmission device. Stream $s_2$ now contains explicit objects and the actions that are being done. This still isn't a stream that can be directly viewed on the user terminal 5 however. It is not yet rasterized; i.e. the pixels that will be shown on the viewing device have not been generated yet. This is the task of a third content transmission device; it will take the objects and render the image that can be used by the device according to its specific requirements (spatial and temporal resolution, object quality requirements, etc.). Stream $s_3$ can now be readily consumed by the user terminal 5.

In other examples, the content item $s_0$ may be a pixel-based encoded video, and the transformations may include pixel-based filters, pixel-based content aggregation/merging, self-representations in virtual environments...

Transformation rules specifies how the content transmission devices may transform the content. The transformation rules may specifies allowed transformation, including free transformation and limited transformation, and prohibited transformation. A limited transformation is only allowed for given values of one or more transformation parameters. For example, a limited transformation may be a rotation associated with allowed rotation angles, or a scaling associated with allowed scaling factors. In contrast, such restrictions do not apply to a free transformation, which may be for example a rotation in any angle...

The content item $s_0$, $s_1$... transmitted in the telecommunication network 1 are associated with respective signature token, denoted Token($s_0$), Token($s_1$), Token($s_2$) and Token($s_3$) on Figure 1. A signature token allows certifying that a content item results from one or more allowed transformations of the content item $s_0$. The generation of the signature token by the content transmission devices and the certification of content are described in more details hereafter, with reference to Figure 2 to 4.

Accordingly, in the telecommunication network 1, the user terminal 5 may certify that the received content complies with the specification of the content producer and the transformation rules, without requiring an identity between the original content and the received content.

**Figure 2** is a flowchart of a content certification method, executed by the content server 2.

The content server 2 determines a certification package CP associated with a content item s (step S1). The certification package includes transformation data TD, a signature function T(), and signature token generation data SD.

The transformation data TD specify transformation rules associated with the content item. As discussed above, the transformation rules may specify at least one of free transformations, limited transformations and prohibited transformations. An allowed transformation may be a combination of one or more free transformations and limited transformations applied with the corresponding limitation(s). A non-allowed transformation comprises at least a prohibited transformation or a limited transformations applied by infringing the corresponding limitation(s)

The signature function T() projects a content item into another domain, which in some embodiment is a lower dimensional space. It has the following properties:

- Invariant to free transformations: $T(x) = T(y)$ if the content item y is a free transformation of the content item x.
- Not invariant to limited or prohibited transformation: $T(x) \neq T(y)$ if content item y is a limited or a prohibited transformation of the content item x.

Accordingly, the image of the signature function T() includes valid values T(y) when the content item y results from allowed transformations of a content x and invalid values T(y) when the content item y results from non-allowed transformations. T() transforms to a representation where the transformation "rules" can be validated and enforced. In some embodiment, this means a dimensionality reduction, but it is not the main goal.

The transformation data TD may take various forms. In an example, the transformation data TD include high-level language specifying the transformation rules, for example based on as a list of codes associated with respective transformation types. In another example, the transformation data include a relation g() which lists the allowed values T(y), where y is an allowed transformation of x. In a first case, T(y) depends on x and g() maps the possible signatures T(x) to the corresponding possible signatures T(y). For example, T(x) may take two values Tx1 and Tx2, and T(y) may take five values Ty1, Ty2, Ty3, Ty4 and Ty5. Moreover, if T(x)=Tx1, T(y) may take the values Ty1 and Ty2 and, if T(x)=Tx2, T(y) may take the values Ty3 and Ty4 and Ty5. In that case, the relation g() may specify the following mapping: g():

$$Tx1 <> Ty1$$

$$Tx1 <> Ty2$$

$$Tx2 <> Ty3$$

$$Tx2 <> Ty4$$

$$Tx2 <> Ty5$$

In some embodiments, the transformation data TD include a plurality of relation g() associated with respective transformation nodes. For example, for a first node, $g_1()$ transforms from a predefined domain A to domain B. For the next node, another function $g_2()$ specifies what can happen to domain B (e.g. function $g_2()$ that specifies transformations from domain B to domain C). If the domain remains compatible (g() transforms from domain A to domain A), this is not an issue and the next node can apply the same rules.

In a second case, T(y) does not depend on x and g() simply lists the possible signatures T(y).

The signature token generation data SD specify a mapping between allowed values of the signature function T() and corresponding signature tokens. Taking the same example as for g() above, the signature token generation data SD may specify the following mapping:

$$Ty1 <> Token\_y1$$

$$Ty2 <> Token\_y2$$

$$Ty3 <> Token\_y3$$

$$Ty4 <> Token\_y4$$

$$Ty4 <> Token\_y5$$

In some embodiments, the mapping between T(y) and Token(y) may be specified based on the values H(T(y)). The H function is a hash function. The hash function H() projects the input to a low-dimensional space in a way that the distance in the input space does not correlate to a distance in the low-dimensional space. Such functions are commonly used in the digital rights domain, and examples are MD5/6, SHA-512, ... The main 'idea' of such a function is that you can have a short 'code' that identifies the input and that chances are very low that a different input results in the same 'code'. In such an embodiment, an example mapping specified by the signature token generation data may be:

$$H(Ty1) <> Token\_y1$$

$$H(Ty2) <> Token\_y2$$

$$H(Ty3) <> Token\_y3$$

$$H(Ty4) <> Token\_y4$$

$$H(Ty5) <> Token\_y5$$

More detailed example of the signature function T(), the transformation data TD and the signature token generation data SD are described hereafter.

The content server 2 determines a signature token Token(s) associated with content item s (Step S2).

In an example, the signature token Token(s) is: Token(s) = [T(s)], wherein the [] in this expression indicate that this information is encrypted with the private key of the digital rights owner of whom we want to protect his/her assets or identity. Note that the associated public key of this digital rights owner is available to anyone, so the [] isn't used for encryption here, but rather for verification that the content within is actually created by the digital rights owner. In another example, the signature token Token(s) is: Token(s) = [H(T(s))], wherein the [] is used in the same manner and H() is a hash function as explained above.

The content server 2 sends the content item s, the associated signature token Token(s) and the certification package CP (Step S3), for example in response to a request from a trust-less node 3, a trusted node 4 or a user terminal 5.

**Figure 3** is a flowchart of a content certification method, executed by a trust-less node 3.

A trust-less node 3 receives, from the content server 2, an upstream trust-less node 3 or an upstream trusted node 4, a content item x, a token signature Token(x) and the certification package CP (Step T1).

Then, the trust-less node 3 checks that the content item x satisfies the transformation rules specified by the content owner (Step T2). Accordingly:

- The trust-less node 3 determines a signature value, which may be for example H(T(x)) or T(x) depending on how the content server 2 determined the token signature Token(x) at step S2, using the signature function T() specified in the certification package CP,
- The trust-less node 3 decrypt the received signature token Token(x), using the public key of the content owner,
- The trust-less node 3 compares the determined signature value with the decrypted signature token. In case of a match, this means that the content item x satisfies the transformation rules specified by the content owner. The content item x is certified.

Then, the trust-less node 3 transforms the content item x into a content item y, while respecting the transformation rules specified by the transformation data TD included in the certification package CP, and determines the corresponding signature token Token(y) (Step T3). The trust-less node 3 does not know the private key of the content owner and cannot determine Token(y) by signing H(T(y)) or T(y) itself. However, since the certification package CP contains signature token generation data SD which maps T(y) to the corresponding token signatures Token(y), the trust-less node 3 can select the appropriate token signature among the one specified in the signature token generation data SD.

Then, the trust-less node 3 sends the content item y, the associated signature token Token(y) and the certification package CP (Step T4), for example to another trust-less node 3, a trusted node 4 or a user terminal 5.

A content certification method, executed by a trusted node 4 comprises similar steps as T1 to T4. However, the determining of the signature token is not based on the certification package.

Indeed, while a lot of transformations can be modeled using the trust-less method, there might be some transformations where this isn't feasible. For transformations that have large domains and codomains and of which the input/output is of very high dimensionality, it can be difficult to design the token signature generator data SD. Typically, these issues occur where the transformation implements a rendering-type operation of, for example, 3d data to the pixel domain. Think for example of the number of choices with regards to rendering resolution, color spaces, etc. In such cases, it can be beneficial to create a trusted node 4 which has a certificate that is signed by the content rights owner. This node is then allowed to execute the approved transformations after which the node can signs the output stream itself with its own private key. The certificate hierarchy facilitates that this output stream can be certified with regards to the rights owner (the signing certificate is from a 'trusted' node).

For an input stream s the trusted node applies transformation resulting in an output stream k. The difference with the trust-less case is that the signature token [T(k)] or [H(T(k))] is now not generated based on digital-rights-owner-provided token signature generation data SD, but it is generated by the trusted node 4 itself by encrypting T(k) or H(T(k)) it with the nodes own private key.

The downside of this is that the infrastructure involves trusted nodes 4 that are certified. While this is also the case in traditional digital rights systems (e.g. HDMI-HDCP), the number of them should be minimized. The usage of the trust-less approach should thus be maximized. For example, a content distribution system may combine trust-less and trusted nodes in order to provide a certified stream throughout the system. The process of transforming a high-level semantic stream towards a pixel-based stream can be split in various levels of abstraction, each adding some degrees of freedom which are fenced by the allowable operations that are governed by the digital rights owner. If these degrees of freedom become too difficult to model (which is typically at the end), a trusted node can take care of the final transformation(s).

A content certification method, executed by a user terminal 5, comprises receiving, from the content server 2, an upstream trust-less node 3 or an upstream trusted node 4, a content item x, a token signature Token(x) and the certification package CP (as in Step T1).

Then, the user terminal 5 checks that the content item x satisfies the transformation rules specified by the content owner. This is performed as described above for Step T2.

In case of a match, the certified content is displayed. In case of no match, the user terminal 5 may for example display a message specifying that the content has not been certified.

In case a trust-less node 3 infringes the transformations rules, it determines an output content y' which is not an allowed transformation of an input content x. The trust-less node 3 may determine T(y') and H(T(y')), however, it cannot determine [T(y')] and [H(T(y'))] because it does not know the private key of the content owner and the signature token generation data SD do not map T(y'), which is not a valid value for T(), to a signature token. At best, the trust-less node 3 could select one of the signature token specified in the signature token generation data SD and send it with the output content y'. However, in that case, the trust-less node 3, the trusted node 4 or the user terminal 5 which receives the output content y' and the signature token will not find a match when trying to certify the output content y' (Step T2 above or corresponding step).

In a first example, the content $s_0$ is a pixel-based encoded video, a frame of a video, or a static image. The content owner chooses to allow its content to be transformed in the following way:

- Free translation.
- Free scale.
- Limited rotation.
- Full frame transforms (full frame should always be seen).
- No perspective transforms, morphs, etc.

The content owner can restrict the degree to which one can rotate by setting the ranges that are allowed for the rotation angle.

The signature function T is designed to exhibit the following properties:

- Significant dimensionality reduction so the relation g() is limited in size.
- Invariant to free transforms - in this case translation and scale.
- Not invariant to limited transforms - in this case rotation because the content owner wants to set the allowed ranges. These transforms will be handled by the g() function.
- Not invariant to prohibited transforms such as perspective transforms, cropping of the content, morphs, adaptations to the content, etc.

A two-phased function T() := T1(T2()) may be used to enable these properties. Note that extra information is added to enable calculation of T. This is assumed to be part of the certification package CP.

$$x' = T2(x)$$

x is the complete image represented as concatenated rgb values in scanline order.

x' is a representation of registered SIFT features (Scale-invariant feature transform). SIFT features are translation and scale invariant:

- first a sparse feature detector called SIFT is performed on the image x
- then feature matching is done between these SIFT features, and the registered features in the certification package CP,
- if not all registered features from the package found a match, cancel (generate invalid output for T)
- output the 2D coordinates of the features

$$Tx = T1(x')$$

x' is a representation of registered SIFT features (note: SIFT features are translation and scale invariant).

Tx is a scalar representation of the rotation of these features compared to the reference:

- get the registered features from the certification package, and their registered 2D locations.
- solve p'=s*R*p for s and R with

  - p and p' a 2D feature in the registered set and x'.
  - R a rotation matrix:

$$\begin{bmatrix} \cos\theta & -\sin\theta \end{bmatrix}$$

$$\begin{bmatrix} \sin\theta & \cos\theta \end{bmatrix}$$

  - s a scalar that represents the scale
  - Note: the solution is solved over each point in the feature set. I.e. the $\theta$ and s are searched that minimize the error

- binning of the $\theta$ value according to the requirements of the content owner. E.g. if the allowed rotation ranges are [-15°, 15°] and [45°,60°], one can bin with 15° bins (e.g. 2° will go to bin 0 while 50° will go to bin 3). Tx is this bin value.

The content server 2:

- Generate SIFT features for the content
- Create a certification package with

o the function g that maps the signature inputs to the possible signature outputs. As in this example the transform is not dependent on the source, this is simply a list of allowed signature outputs: For allowed angles [-15°,15°] and [45°,60°], g() := { -1, 0,3}

o the signature token generation data SD that maps the hashed signature inputs to the certified hashed signature outputs:

- H(-1) <> [H(-1)]
- H(0) <> [H(0)]
- H(3) < > [H(3)]

○ the signature function T (including the metadata; in this case the original SIFT features and their 2D locations)

A trust-less node 3:

- Follows the directions of the content owner; i.e. in this case always include the whole frame, can scale/translate and limited rotation.
- Calculate T(y) with y the generated frame

  o If this was generated according to the directions, then T(y) should be -1, 0 or 3. The validity can be checked by accessing the g() function (is T(y) part of the list in g()? ).

- Select the appropriate signature token T(y) matching H(T(y)) according to the signature token generation data SD, and send this along with the generated frame and the certification package CP.

To check if a stream is certified, a trust-less node 3, a trusted node 4 or a user terminal 5:

- Calculates T(x) with x the frame of the to-be-checked stream.
- Assert that the calculated H(T(x)) matches the certification of the input stream [H(T(x))].

In a second example, the content $s_0$ is a video. The content owner chooses to allow its video to be transformed in the following way:

- Free use of a 1-to-1 version of the content (no translate, scale, rotate, etc.).
- Free temporal cutting, except for specified "temporal atoms"
- The temporal atoms have controlled splitting/merging rules. The order is thus controlled. E.g. for a news program with several news items that can only be combined in certain ways. For example, a video comprises the successive segments: Free segment 1, Atom1, Free segment 2, Atom2, Atom3, Free segment 3, Atom4, Free segment 4. The allowed combinations must comprise one of:
- Atom1, Atom2, Atom3 and Atom4, in this order
- Atom1, Atom2 and Atom4, in this order
- Atom4.

As with the previous example, a feature-based approach is used to limit the information that is needed to specify the rules. Note that this approach can be optimized for bandwidth by using spline-based interpolation rather than the per-frame features that we will be using here.

The T() signature function will in this case output feature traces of the registered temporal atoms. A similar approach as in the previous example is used for generating these feature traces. First the certification package provides guidance to what features are needed. This can for example be the SIFT features themselves as in the previous case, but one can also just send parameters for selecting certain features and including the features of the first- and last frames of each atom so these can be identified while calculating the T() function.

So the certification package contains the feature traces for the start- and end frame of each of the atoms. The T() function will output the feature traces for each frame of the detected atoms (concatenated).

For the original stream x, this would give the following:

$$T(x) = \{Atom1\_frame1\_features, \quad Atom1\_frame2\_features, \quad ...,$$
$$Atom2\_frame1\_features, \quad Atom2\_frame2\_features, ...\}$$

Or in short: T(x)={Atom1, Atom2, Atom3, Atom4}
g() will in this case be (to accommodate the transforms specified before):

$$g(Atom1, Atom2, Atom3, Atom4) <> Atom1, Atom2, Atom3, Atom4$$

$$g(Atom1, Atom2, Atom3, Atom4) <> Atom1, Atom2, Atom4$$

$$g(Atom1, Atom2, Atom3, Atom4) <> Atom4$$

The signature token generation data SD specify the mapping:

$$H(Atom1,Atom2,Atom3,Atom4) <> [H(Atom1,Atom2,Atom3,Atom4)]$$

$$H(Atom1,Atom2,Atom3,Atom4) <> [H(Atom1,Atom2,Atom4)]$$

$$H(Atom1,Atom2,Atom3,Atom4) <> [H(Atom4)]$$

As explained before, the certification package specifies a relation g() which may map the possible signatures T(x) to the corresponding possible signatures T(y), where y is an allowed transformation of x.

There's an issue however when a content y can be reconstructed from T(y) without the need of the matching content x. In this case, a malicious transformation node can send whichever output content y it wants regardless of the input content x. Referring to the example of relation g() described before, if T(x)=Tx2, then the output content y should satisfy T(y)=Ty3, Ty4 or Ty5. However, a malicious node could send an output content y with T(y)=Ty2 instead of Ty5, all it needs to do is select Ty2 from g() (break-case assumption was that an output content y with T(y)=Ty2 can be reconstructed from g() without the need for the matching input content x with T(x)=Tx1 or Tx2), and iterate over the available signatures specified in SD to find the matching [H(Ty2)]. This is not acceptable as the sender want to make sure that the information that is transformed is the actual sent information, not other - be it plausible - information.

In order to deal with the break-case, in some embodiments, besides the relation g() and the signature token generation data SD, a de-contaminator function h() is introduced. The relation g() now does not generate the signature of the output stream directly, but it generates a contaminated version which is unusable without de-contaminating it. The de-contaminating function h takes the contaminated output along with a hashed input and generates the de-contaminated output T(y). Note that the hashing function should be a different one than used in the other parts of the system, this to prevent a similar attack as previously stated.

Now, even if function g provides the output values without requiring the input, the malicious node can still not generate a valid output stream because it cannot decontaminate it without having the actual input.

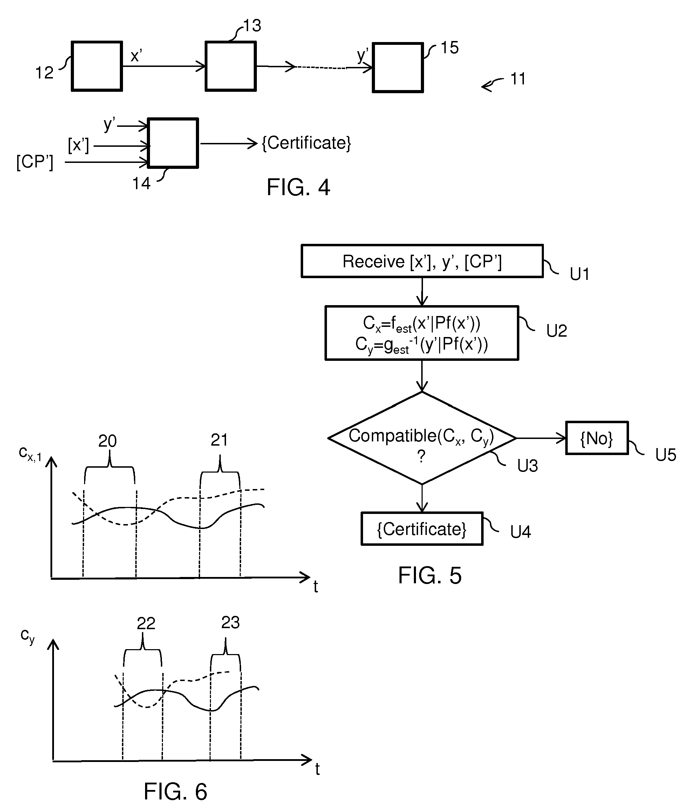

**Figure 4** is a partial view of telecommunication network 11. The telecommunication network 11 comprises a content server 12, one or more content transmission devices 13, a certification device 14 and one or more user terminals 15.

The content server 12 generates and/or store media content. The media content may be for example a pixel-based encoded video, a semantically described video, a static image, audio content, text...or a combination thereof.

A media content item is transmitted from the content server 12 to the user terminal 15, through the content transmission devices 13. The content transmission devices 13 may transform the media content. Accordingly, in Figure 4, the content server 12 sends a content item x', which is transformed by one or more transformation nodes 13 into a content item y' received by the user terminal 15.

The successive transformations of the content aims for example at adapting the content throughout the network. For example, a source video stream is generated and injected in the network. A number of transformations are applied to this video stream. These transformations adapt the content to the network/user/device conditions.

In an example, the content item x' is a semantic video stream, which defines the type of objects that are in the stream, the type of actions that are being done and so on. The successive content transmission devices 13 transform the semantic level in order to (typically) move from high-level semantics to lower level representations (up to the point of pixels). For example, a first content transmission device transforms 13 this semantic video stream into a more explicit stream where the objects types are replaced by actual object. They are instantiated according to the current conditions (network/device/user/etc.). The actions are still abstract however in the resulting stream. These are instantiated by a second content transmission device. The stream now contains explicit objects and the actions that are being done. This still isn't a stream that can be directly viewed on the user terminal 15 however. It is not yet rasterized; i.e. the pixels that will be shown on the viewing device have not been generated yet. This is the task of a third content transmission device; it will take the objects and render the image that can be used by the device according to its specific requirements (spatial and temporal resolution, object quality requirements, etc.). The resulting stream can now be readily consumed by the user terminal 15.

In other examples, the content item x' may be a pixel-based encoded video, and the transformations may include pixel-based filters, pixel-based content aggregation/merging, self-representations in virtual environments...

Transformation rules specifies how the content transmission devices 13 may transform the content. The transformation rules may specifies allowed transformation, including free transformation and limited transformation, and prohibited transformation. A limited transformation is only allowed for given values of one or more transformation parameters. For example, a limited transformation may be a rotation associated with allowed rotation angles, or a scaling associated with allowed scaling factors. In contrast, such restrictions do not apply to a free transformation, which may be for example a rotation in any angle...

The certification device 14 may certify that a content item y' results from one or more allowed transformations of a content item x'.

Due to the potentially vast amount of transformations that are possible on content item x', it can be very difficult to check whether y' is a valid instance of x' from these two content items alone. Assume for example that x' is a semantic stream that merely states what objects are in the video and what they are doing while y' is a pixel-based rendered version of this semantic stream. It is very hard to invert this transformation from the input- and output stream alone in this case. Accordingly, in the telecommunication network 11, the certification device 14 uses hints provided by the content owner, in order to make this (partial) inversion feasible.

Assume a source content item x' and a transformed content item y'. Furthermore assume that y'=h(x') with h a certain binary relation. Note that the term binary relation is used rather than a function because a function can only have one output for a certain input. If this were the case, the transformation wouldn't leave any choice to the intermediary transformation nodes 13. A binary relation does not have this restriction. In order to assess whether y'=h(x'), one could create an estimate $h^{-1}_{est}$ and apply it to y'. $h^{-+1}_{est}(y')$ can however have multiple results (binary relation). One should thus check if x' is part of this result set. In essence, this is enough to determine whether y' results from an allowed transformation of x'. In practice however, determining $h^{-1}_{est}(y')$ without any help can be quite difficult. The number of potential candidates for x' can quickly deteriorate to unacceptable levels. As such, the digital rights owner should provide hints to aid this estimate by limiting the candidate space. More examples will be given in the two use cases at the end.

Up till now we assumed that the certification device 14 would only try to invert the operation that was applied to x'. While this can be sufficient, there are cases where it can be more efficient to estimate the transformation from x' to y' in both directions. In that case, the assumption is made that h() can be modeled as g(f()) and that both f and $g^{-1}$ can be estimated. The hints for $g^{-1}_{est}$ are denoted Pg(x') and can for example represent the 'acceptable' parameter ranges in case of a model-based approach. Two intermediate sets of comparison items Cx and Cy are then constructed: Cx = $f_{est}(x)$ and Cy = $g^{-1}_{est}(y)$. The capital letter indicates a set of items rather than the stream itself. The two sets are then compared to see if there is a matching item.

A final addition concerns non-exact matching between Cx and Cy. In some cases it can be useful to match an item in Cx and an item in Cy without them being exactly the same. When there is a lot of context information that is being used by a transformation node 13 in order to apply a certain transformation, it can be quite difficult to exactly estimate the forward / inverted functions. As such, instead of requiring exact matches, the digital rights owner can define a function 'compatible()' which takes in two comparison items and identifies whether they are compatible or not. As such one does not need exact correspondences but rather similar correspondences of which the similarity is defined by the digital rights owner.

In an example, relations f and g model the function h in the same cascaded manner as when the transformations by the transformation nodes 13 happen. This is not required. Accordingly, in another example, f and g can be directly modeled to transform x' and y' to the intermediary format (comparison items Cx and Cy) and as such skip intermediate results. The intermediary format can even be more abstract, meaning that f and g transform to a format that wasn't actually used during the actual content transformations in the network 11. This is important as it allows for choosing an optimal transformation regardless of the physical transformations that were done in the network 11.

Accordingly, in the telecommunication network 11, the user terminal 15 (or any other device) may obtain, from the certification device 14, a certificate specifying that the received content item y' complies with the specification of the content producer and the transformation rules, without requiring a identity between the original content and the received content.

**Figure 5** is a flowchart of a content certification method executed by the certification device 14. In this method, the certification device 14 determines whether a content item y' results from an allowed transformation of a content item x', and issues a certificate in the affirmative. For this purpose, the certification device 14 uses various information provided by the content owner or producer in a certification package CP' associated with the content item x'.

Accordingly, the certification device 14 receives a first content item x', a second content item y' and a certification package CP' (step U1). The content item x' and the certification package CP' may be signed with a private key of the content owner, which is denoted by [] on Figure 5. In that case, the certification device 14 uses the corresponding public key for decryption.

The certification package CP' include hint data $Pf(x')$ and $Pg(x')$ associated with the content item x'. In an example, the certification package CP' also specifies the relations $f_{est}$ and $g^{-1}_{est}$ which model the relation h between x' and y' (for example if the relation h changes for various content items transmitted in the telecommunication network). In another example, the relations $f_{est}$ and $g^{-1}_{est}$ are predetermined relations known by the certification device 14 (for example if the relation h stays the same for various content items transmitted in the telecommunication network 11). In some embodiments, the certification package CP' also specifies a function 'compatible()', which may be used for finding a match between comparison items as described hereafter.

Then, the certification device 14 determines a set Cx of first comparison items in function of the content item x' and the hint data $Pf(x)$, by using the relation $f_{est}$, and a set Cy of second comparison items in function of the content item y' and the hint data $Pg(x)$, by using the relation $g^{-1}_{est}$ (step U2):

$$Cx = f_{est}(x', Pf(x'))$$

$$Cy = g^{-1}_{est}(y', Pg(x'))$$

Then, the certification device 14 determines whether one of the content items in Cx matches one of the content items in Cy (step U3). In some embodiments, the certification device 14 search for an exact match. In other embodiments, the certification device 14 applies the 'compatible()' function to pairs of comparison items from Cx and Cy and searches for a positive result.

In case of a match, the certification device 14 issues a certificate specifying that the content item y' results from one or more allowed transformations of the content item x' (step U4). The certificate is for example signed with a private key of the certification device 14, as denoted by {} on Figure 4. For this, the certification device 14 may be a trustee of the content owner.

In contrast, in case no match is found at step U3, the certification device 14 may issue a message specifying that the content item y' does not result from allowed transformation of the content item x' (step U5).

In a first example, the content items x' and y' are pixel-encoded videos, and the one or more transformation nodes 13 creates a video mash-ups. A mash-up is a combination of other videos with adapted frame rate, temporal and spatial modifications, etc. In this example, we assume that the digital rights owner wants to allow people to use the content in video mash-ups, however he/she wants to make sure that the modifications are limited in order to prevent out-of-context type of abuses.

For this example, we assume that the digital rights owner wants to enforce the following rules:

- Temporal splits are only allowed at certain places
- Temporal acceleration/deceleration is allowed
- Video re-cropping is allowed, however only around the main subject
- Spatial resampling is also permitted (change resolution)

The transformations that are typically applied for such a mash-up by the one or more transformation nodes 13 include: First spatial resampling is done; i.e. the resolution is changed. After that, temporal alterations (faster, slower, temporal cut), cropping (only show certain spatial region) and recomposition (combine with other content) operations are done to create the resulting mashup.

The goal of the certification device 14 is now to verify that the previously set rules have been followed, or that the content item y' (the mashup video) results from allowed transformations of the content item x' (the source video).

Accordingly, the certification device 14 determines comparison items Cx in function of the content item x' and of hint data $Pf(x')$. In this example, determining the comparison items x' comprises resampling content item x' with a number of different techniques, for example nearest neighbor, bilinear and bicubic. This is done because of the assumption that the next step is depending on this choice. The resampled version may be denoted $t_{x,1}$, $t_{x,2}$ and $t_{x,3}$. Then, the certification device 14 determines feature tracks $c_{x,1}$, $c_{x,2}$ and $c_{x,3}$ associated with respective resampled versions of the content items x' $t_{x,1}$, $t_{x,2}$ and $t_{x,3}$. Indeed, because of the abstract nature of the rules, the choice is made to introduce an intermediary format for evaluating these rules. The intermediary format is feature-track based (the evolution of image features over time). In this example, the hint data Pf(x') specify how to determine the feature tracks, for example it specify which features to detect...

The certification device 14 also determines a comparison item cy in function of the content item y' and of hint data Pf(x'). In this example, the comparison item cy is a feature track determined by detecting, in the content item y', the features specified by the hint data Pg(x').

Then, the certification device 14 compares the comparison items $c_{x,1}$, $c_{x,2}$ and $c_{x,3}$ with the comparison item cy, by using a 'compatible()' function specified in the features track domain: Compatible($c_{x,l}$ $c_y$) provides a binary output which specifies whether $c_{x,l}$, $c_y$ match. In this example, the 'compatible()' function include metadata about temporal atoms (parts of the source video which cannot be cut), and allows for a scale difference between the feature track (corresponding to the allowed temporal acceleration/deceleration).

This comparison is illustrated on **Figure 6** which shows a simplified example of the feature tracks $c_{x,1}$ and $c_y$ and provides an indication about what the compatible function needs to take into account. The top graph shows a 2D interpretation of such feature tracks. Note that this 2D representation is only for illustrative purposes; features usually exhibit higher dimensionality. The evolution over time of three such features is shown. The temporal regions 20 and 21 are regions that cannot be cut ("temporal atoms"). The bottom graph shows the feature tracks for content item y'. The temporal regions 22 and 23 correspond to the temporal regions 20 and 21. The features have been temporally squashed (faster playback), which is allowed. As such, the first temporal atom does not violate the rules. There is an issue with the second temporal atom however. One of the features track stops within the atom. This indicates that there has been spatial cropping in the region where this was not allowed (rule 3). As such, the compatible function does not detect a match between stream $c_{x,1}$ and $c_y$, and the content item y' is not certified as an allowed transformation of the content item x'.

In this example, the certification device 14 allows for video mash-ups to be certified whilst maintaining creative freedom to the creator of such mash-ups. The transformation nodes 13 can transform the content up to what was allowed by the digital rights owner.

In a second example, the content item x' is a semantically described video, and the content item y' is a pixel-based encoded video.

Briefly put, a semantic video starts with a description of the story rather than an explicit instance of it. By describing the story of the video and indicating what is important and what is less so, one can create a very flexible representation that facilitates scalability at various levels throughout the network, devices and users. It uses objects to reconstruct an actual video, of which the object model can be free to choose (2d appearance models, 3d morphable models, etc.). Furthermore the objects have a structure embedded within that expose class hierarchy. More specifically, the structures facilitate 'scalable generality'. E.g. human -> women -> Scarlett Johansson; generic to specific. The same hierarchical structure is also embedded in the actions that these objects are executing. E.g. waving arm -> arm up at time t -> arm at pos x with rotation y at time t.

As with the video mashup case, we'll first define a set of rules that are set by the digital rights owner. The rules for the semantic video case are :

- The first rule specifies that the person who is shown in the semantic video can be 'abstracted'; i.e. it is allowed to replace that specific person with a more generic class instance. For example, it is allowed to replace the person 'Scarlett Johansson' with a more generic person 'Jane Doe' as long as 'Jane Doe' resides upstream in the same object class hierarchy. Note that, for sake of clarity, we assume only 1 actor in the stream.
- A second rule is related to the rendering viewpoint. While the semantics can indicate an 'ideal' rendering viewpoint, the certification allows for a free choice of the rendering viewpoint. As such, the viewpoint doesn't necessarily have to adhere to the one described in the semantic stream.
- The third rule is related to the actions that are executed by the objects. Here the rule is quite stringent. The actions needs to closely match those defined in the semantic stream. A transformation node 13 can thus not simply replace an action with another action. Note that the level of abstraction of the original semantic stream drives the explicit meaning of this rule. If, for example, an action is described as 'waving' in the semantic stream, then it is not specified where the arm is at time instance t. It just means that there should be temporal variations in the arm that resembles a waving action. In contrast, the semantic stream can explicitly define where the arm should be at a certain time instance and, in this case, the transformed stream should adhere to this specification.

In this case, semantic video is used for allowing the successive transformation nodes 13 to flexibly scale the stream with regards to bandwidth usage. An ingestion transformation node 13 that is located near the content server 2 will instantiate objects based on the semantic stream and the current network state. A rendering transformation node 13 near the consumer will then take this socalled object stream and render a pixel-based stream that is consumed by the end-user. The rendering node has an object store that contains various reusable objects that have already been processed by this node and that have been cached. The contents of this object store will also be used by the ingestion node in order to determine what objects should be instantiated for certain network conditions.

Let's illustrate this with a concrete example. Say the semantic stream defines that a certain person is located in the scene. The specific identity of the person is given, however the semantics of the person indicate that the identity is not dominant to the story. As such, the ingestion node is offered some flexibility for instantiating this person. Ideally, without having to take into account any conditions or requirements other than reconstruction quality, the ingestion node will instantiate this person with an object that resembles the input as accurate as possible. By doing so, the resulting reconstruction of the stream will also contain a representation of this person as it was conceived by the content creator. In case of stringent network conditions however, the ingestion node has the flexibility to move up on the object class hierarchy and select a more generic representation of this specific person. The more generic the representation, the higher the chance that this model is already present in the model store at the rendering node. This is due to the fact that the object hierarchy also includes data dependencies; a more specific object will re-use data from the more generic version and only add the delta to create the object. This property thus gives the ingestion node the chance to select more generic models in order to save bandwidth (fewer data needs to be sent to the model store).

As mentioned before, the rendering node will take object stream and render the objects in order to produce a pixel-based stream that can be consumed by the end-user. This node still has the flexibility to freely choose the viewpoint. In this case, the renderer uses the proposed viewpoint that it in the object stream, however it allows the end-user to alter this viewpoint via an out-of-band return channel. The end-user can now choose for a lean-back experience where the viewpoint is driven by the content creator, or a more engaging experience where the end-user can navigate through the scene freely.

At the certification device 14, the forward function f first creates a number of valid stream instantiations by taking into account the rules that are allowed on the stream. As such, these instantiations will include various versions of the actor in the stream and instantiate the actions as they are (no freedom allowed). The backward relation $g^{-1}$ has the pixel-based stream as an input, and needs to generate the compatible object streams that will result in this pixel based version. This is not straightforward, however the hinting mechanism is invaluable here. The hint data $Pg(x')$ can for instance include parameter ranges that are allowed when instantiating the models. By reducing the search space, one can more easily fit the models to the pixel data and assert their validity. As model fitting is prone to small errors, the compatible function then compares the results from f and g and determines whether the differences are still within the permitted bounds. These bounds are also given as a hint.

**Figure 7** is a structural view of a content processing device, which may be a content server 2, a trust-less node 3, a trusted node 4 or a user terminal 5, or a content server 2, a transformation node 13, a certification device 14 or a user terminal 15. The content processing device comprises a processor 6 and a memory 7. The memory 7 stores a computer program P which, when executed by the processor 6, cause the control device 2 to execute one of the methods described above with reference to Figures 2, 3 and 5.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

**Claims**

1. Method for certification of content, executed by a content processing device (3, 4, 5), comprising:

   - receiving (T1) a content item (x), a signature token (Token(x)) and a certification package (CP), wherein the certification package (CP) specifies:

      - transformation data (TD) specifying transformation rules associated with the content, wherein the transformation rules specify at least one of a free transformation, a limited transformation and a prohibited transformation, and
      - a signature function (T()) which is invariant to free transformations, and not invariant to limited or prohibited transformations, and

   - checking (T2) a match between a signature value (H(T(x), T(x)) determined in function of the output of the signature function applied to the received content, and the signature token decrypted with a public key associated with the content.

2. Method according to claim 1, wherein the certification package further specifies signature token generation data (SD) specifying a mapping between allowed values of the signature function and corresponding signature tokens, the method comprising:

   - determining (T3) an output content item (y) in function of the received content (x) and the transformation rules, and an output signature token (Token(y)) in function of the output content item (y) and the signature token generation data (SD).

3. Method according to claim 2, comprising sending (T4) said output content item, said output signature token and said certification package to another device (3,4,5).

4. Method according to one of claims 1 to 3, wherein said transformation data (TD) specify a list of allowed values of the signature function (T()).

5. Method according to claim 4, wherein said transformation data (TD) specify a mapping between values of the signature function for the content item (x) and values of the signature function for the output content item (y).

6. Method according to one of claims 1 to 5, wherein said signature value (H(T(x))) is determined by applying a hash function to the output of the signature function applied to the received content.

7. Content processing device (3, 4, 5) for certification of content, comprising means configured for:

   - receiving (T1) a content item (x), a signature token (Token(x)) and a certification package (CP), wherein the certification package (CP) specifies:

      - transformation data (TD) specifying transformation rules associated with the content, wherein the transformation rules specify at least one of a free transformation, a limited transformation and a prohibited transformation, and
      - a signature function (T()) which is invariant to free transformations, and not invariant to limited or prohibited transformations, and

   - checking (T2) a match between a signature value (H(T(x), T(x)) determined in function of the output of the signature function applied to the received content, and the signature token decrypted with a public key associated with the content.

8. Method for certification of content, executed by a content certification device (14), comprising:

   - receiving a first content item (x'), first hint data (Pf(x')) and second hint data (Pg(x')) associated with the first content item (x'), and a second content item (y'), wherein transformation rules are associated with the first content item (x'),
   - determining first comparison items (Cx) in function of the first content item (x') and the first hint data (Pf(x')), and second comparison items (Cy) in function of the second content item (y') and the second hint data (Pg(x')),
- determining whether the second content item is an allowed transformation of the first content item, by comparing the first comparison items and the second comparison items.

9. Method according to claim 8, comprising receiving a first relation ($f_{est}$) and a second relation ($g^{-1}_{est}$) associated with the first content item (x'), wherein determining the first comparison items (Cx) uses the first relation ($f_{est}$) and determining the second comparison items (Cy) uses the second relation ($g^{-1}_{est}$).

10. Method according to one of claims 8 to 9, wherein determining whether the second content item is an allowed transformation of the first content item comprise comparing the first comparison items and the second comparison items by using a compatible function specified for identifying a non-exact match.

11. Method according to one of claims 8 to 10, comprising issuing a signed certificate in response to determining that the second content item is an allowed transformation of the first content item.

12. Method according to one of claims 8 to 11, wherein determining first comparison items (Cx) comprises determining feature tracks including detected features specified by said first hint data (Pf(x')), and/or determining second comparison items (Cy) comprises determining feature tracks including detected features specified by said second hint data (Pg(x')).

13. Method according to one of claims 8 to 12, wherein determining second comparison items (Cy) comprises fitting at least one object model on said second content item (y'), wherein said second hint data (Pg(x')) specifies allowed values for at least one model fitting parameter.

14. Content certification device (14), comprising means for:

- receiving a first content item (x'), first hint data (Pf(x')) and second hint data (Pg(x')) associated with the first content item (x'), and a second content item (y'), wherein transformation rules are associated with the first content item (x'),
- determining first comparison items (Cx) in function of the first content item (x') and the first hint data (Pf(x')), and second comparison items (Cy) in function of the second content item (y') and the second hint data (Pg(x')),
- determining whether the second content item is an allowed transformation of the first content item, by comparing the first comparison items and the second comparison items.

15. Computer program (P) comprising instructions for performing the method of one of claims 1 to 6 or 8 to 13 when said instructions are executed by a computer.

**Amended claims in accordance with Rule 137(2) EPC.**

1. Method for certification of content, executed by a content processing device (3), comprising:

- receiving (T1) a content item (x), a signature token (Token(x)) and a certification package (CP), wherein the certification package (CP) specifies:

- transformation data (TD) specifying transformation rules associated with the content, wherein the transformation rules specify at least one of a free transformation, a limited transformation and a prohibited transformation, and
- a signature function (T()) which is invariant to free transformations, and not invariant to limited or prohibited transformations, and

- checking (T2) a match between a signature value (H(T(x), T(x)) determined in function of the output of the signature function applied to the received content, and the signature token decrypted with a public key associated with the content, wherein the certification package further specifies signature token generation data (SD) specifying a mapping between allowed values of the signature function and corresponding signature tokens, the method comprising:
- determining (T3) an output content item (y) in function of the received content (x) and the transformation rules, and an output signature token (Token(y)) in function of the output content item (y) and the signature token generation data (SD).
- sending (T4) said output content item, said output signature token and said certification package to another device (3, 4, 5).

2. Method according to one claim 1, wherein said transformation data (TD) specify a list of allowed values of the signature function (T()).

3. Method according to claim 2, wherein said transformation data (TD) specify a mapping between values of the signature function for the content item (x) and values of the signature function for the output content item (y).

4. Method according to one of claims 1 to 3, wherein said signature value (H(T(x))) is determined by applying a hash function to the output of the signature function applied to the received content.

5. Content processing device (3) for certification of content, comprising means configured for:

   - receiving (T1) a content item (x), a signature token (Token(x)) and a certification package (CP), wherein the certification package (CP) specifies:

      - transformation data (TD) specifying transformation rules associated with the content, wherein the transformation rules specify at least one of a free transformation, a limited transformation and a prohibited transformation, and
      - a signature function (T()) which is invariant to free transformations, and not invariant to limited or prohibited transformations, and

      - checking (T2) a match between a signature value (H(T(x), T(x)) determined in function of the output of the signature function applied to the received content, and the signature token decrypted with a public key associated with the content, wherein the certification package further specifies signature token generation data (SD) specifying a mapping between allowed values of the signature function and corresponding signature tokens, the content processing device further comprising means for:
   - determining (T3) an output content item (y) in function of the received content (x) and the transformation rules, and an output signature token (Token(y)) in function of the output content item (y) and the signature token generation data (SD).
   - sending (T4) said output content item, said output signature token and said certification package to another device (3, 4, 5).

6. Method for certification of content, executed by a content certification device (14), comprising:

   - receiving a first content item (x'), first hint data (Pf(x')) and second hint data (Pg(x')) associated with the first content item (x'), and a second content item (y'), wherein transformation rules are associated with the first content item (x'),
   - determining first comparison items (Cx) in function of the first content item (x') and the first hint data (Pf(x')), and second comparison items (Cy) in function of the second content item (y') and the second hint data (Pg(x')),
   - determining whether the second content item is an allowed transformation of the first content item, by comparing the first comparison items and the second comparison items.

7. Method according to claim 6, comprising receiving a first relation ($f_{est}$) and a second relation ($g^{-1}_{est}$) associated with the first content item (x'), wherein determining the first comparison items (Cx) uses the first relation ($f_{est}$) and determining the second comparison items (Cy) uses the second relation ($g^{-1}_{est}$).

8. Method according to one of claims 6 to 7, wherein determining whether the second content item is an allowed transformation of the first content item comprise comparing the first comparison items and the second comparison items by using a compatible function specified for identifying a non-exact match.

9. Method according to one of claims 6 to 8, comprising issuing a signed certificate in response to determining that the second content item is an allowed transformation of the first content item.

10. Method according to one of claims 6 to 9, wherein determining first comparison items (Cx) comprises determining feature tracks including detected features specified by said first hint data (Pf(x')), and/or determining second comparison items (Cy) comprises determining feature tracks including detected features specified by said second hint data (Pg(x')).

11. Method according to one of claims 6 to 10, wherein determining second comparison items (Cy) comprises fitting at least one object model on said second content item (y'), wherein said second hint data (Pg(x')) specifies allowed values for at least one model fitting parameter.

12. Content certification device (14), comprising means for:

- receiving a first content item (x'), first hint data (Pf(x')) and second hint data (Pg(x')) associated with the first content item (x'), and a second content item (y'), wherein transformation rules are associated with the first content item (x'),
- determining first comparison items (Cx) in function of the first content item (x') and the first hint data (Pf(x')), and second comparison items (Cy) in function of the second content item (y') and the second hint data (Pg(x')),
- determining whether the second content item is an allowed transformation of the first content item, by comparing the first comparison items and the second comparison items.

13. Computer program (P) comprising instructions for performing the method of one of claims 1 to 4 or 6 to 11 when said instructions are executed by a computer.

Token($s_0$)

$s_0$

2

Token($s_1$)

$s_1$

3

Token($s_2$)

$s_2$

3

1

Token($s_3$)

$s_3$

4

5

## FIG. 1

Determine Certification
Package CP:
-Transformation data TD
-T()
-Signature Token generation
data SD

S1

Determine Token(s)

S2

Send s, Token(s),
Certification
Package CP

S3

## FIG. 2

2, 3, 4, 5, 12, 13, 14, 15

6   P

7

## FIG. 7

Receive x, Token(x),
Certification Package CP

T1

Determine H(T(x))
Decrypt Token(x)
Match?

T2

Determine y=Transform(x)
and Token(y)

T3

Send y, Token(y),
Certification Package CP

T4

## FIG. 3

FIG. 4

FIG. 5

FIG. 6

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2002/052849 A1 (MCCUTCHEN ALAN J [US] ET AL) 2 May 2002 (2002-05-02) * paragraphs [0020] - [0025]; claims 1-4 * ----- | 1-15 | INV. G06F21/10 G06F21/64 |
| Y | US 2004/220893 A1 (SPIVACK NOVA [US] ET AL) 4 November 2004 (2004-11-04) * paragraphs [0094] - [0098] * ----- | 1-15 | |
| Y | US 5 765 152 A (ERICKSON JOHN S [US]) 9 June 1998 (1998-06-09) * abstract; figures 5a, 5b, 8a, 8b * ----- | 1-15 | |

**TECHNICAL FIELDS SEARCHED (IPC)**

G06F

The present search report has been drawn up for all claims

| Place of search | Date of completion of the search | Examiner |
|---|---|---|
| Munich | 17 May 2016 | Kerschbaumer, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 30 5175

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2016

| Patent document cited in search report | | Publication date | Patent family member(s) | | Publication date |
|---|---|---|---|---|---|
| US 2002052849 | A1 | 02-05-2002 | AU<br>AU<br>US<br>WO<br>WO | 8845201 A<br>9058101 A<br>2002052849 A1<br>0219134 A1<br>0219169 A1 | 13-03-2002<br>13-03-2002<br>02-05-2002<br>07-03-2002<br>07-03-2002 |
| US 2004220893 | A1 | 04-11-2004 | NONE | | |
| US 5765152 | A | 09-06-1998 | NONE | | |

EPO FORM P0459

For more details about this annex : see Official Journal of the European Patent Office, No. 12/82